# EUROPEAN PATENT APPLICATION

(11) **EP 4 390 980 A1**
(43) Date of publication of application: **26.06.2024**
(21) Application number: 22215919.6
(22) Date of filing: 22.12.2022
(51) Int. Cl.: H01B 12/02, H01B 12/16

(54) **A VARIABLE PERFORMANCE SUPERCONDUCTING CABLE ASSEMBLY**

(71) Applicant: Supernode Limited, Dublin D22HC81 (IE)
(72) Inventor: BÄCKER, Michael, 50670 Köln (DE); HODGE, Eoin, Dublin, D22HC81 (IE); FRULLONI, Emiliano, Dublin, D22HC81 (IE)
(74) Representative: FRKelly

(57) **Abstract**

A variable performance superconducting cable assembly which is configured to provide a substantially constant current carrying capacity between first and second ends of the cable assembly despite an increasing temperature profile along the length of the cable assembly during use.

## Description

### Field of the invention

The present invention relates to a variable performance superconducting cable assembly, and in particular a superconducting cable assembly which is configured to provide a substantially constant current carrying capacity between first and second ends of the cable assembly despite an increasing temperature profile along the length of the cable assembly during use.

### Background of the invention

High-Temperature-Superconducting (HTS) cables offer remarkable advantages over conventional cables. The absence of electrical resistance enables the transport of high power with high amperage and comparably low voltage. In particular in contrast to HVDC transmission lines this allows much smaller converter stations and a smaller footprint of the overall cable network.

In recent years many demonstrators of HTS cables (AC and DC) have been shown to be technically feasible and reliable. All HTS cables realized so far consist on a cable core with a plurality of HTS tapes helically wound on a metallic former, a cryostat surrounding the core with a channel for the cryogenic coolant between core and cryostat, (intermediate) cooling stations and terminations. One of the most advanced and prominent projects is Ampacity in Essen [M. Stemmle, F. Merschel, M. Noe and A. Hobl, "AmpaCity - Advanced superconducting medium voltage system for urban area power supply," 2014 IEEE PES T&D Conference and Exposition, 2014, pp. 1-5, doi: 10.1109/TDC.2014.6863566]. Nevertheless, for commercialization several aspects in optimized use of the expensive superconducting materials and electrical performance in particular under (partial) fault conditions remain to be solved.

The functional material in all HTS cables is HTS tape. In this tape either rare-earth barium copper oxide (REBCO) or lead-bismuth-strontium-calcium-copper oxide (BSCCO) conduct current without resistance when cooled under the critical temperature. For both materials the critical temperature is higher than the boiling point of liquid Nitrogen (LN2), namely 77K at 1atm. This enables the use of liquid nitrogen as a coolant in HTS cables systems which is the precondition for economic feasibility. This coolant results in important limits for the operating conditions as given by the phase diagram of Nitrogen. The cable may be operated with AC single or multiple phases or DC electric systems.

In HTS cables normally the complete span of temperature is used as the refrigeration technology is the other important cost driver. The cryogen coolant is heated up while passing through a cable section due to heat transfer from outside the cable, AC losses in the case of AC cables and normal conducting joints and terminations. This means that for a cable section the lowest temperature of about 63-68K is at the point of injection of the down-cooled cryogen (e.g. LN2) and the warmest temperature is at the extraction point of the heated cryogen. The distance between the two points is translated either to the maximum length of the cable or the maximum length between intermediate cooling stations. These maximum lengths can be influenced by the cable design to a certain extent, but the lengths of the cable between cooling stations remains one of the main cost drivers. While lengths of up to 20km are considered achievable, in the demonstrators and prototypes to date a maximum of up to 3km has so far been realized.

HTS cables, similar to conventional cables, are produced in subsections of 200m-2km lengths depending on the allowed bending radius, cable dimensions and weight, transport restrictions and production capacity. These subsections are then joined during the installation in a continuous cryostat forming the cables section between two cooling stations.

The superconducting properties of HTS tapes are strongly dependent of the operating temperature. For example a performance increase factor of 2.3 may be achieved when a HTS tape is cooled from 77K to 65K. Depending on the cable design this factor can even be higher if higher magnetic fields are generated by the geometric arrangement of the HTS tapes.

Beyond the electrical performance at regular operating conditions the behaviour of a superconducting cable under fault conditions is essential for the possible implementation of HTS cables in existing large scale electric networks/grids. Overcurrent and faults can occur because of fluctuations in the grid, lightning, short circuits due to damaging of the cable, or failures in one or more connected systems.

When loaded with currents beyond the critical current superconducting material suddenly transforms into a high resistance ceramic. This transition is known as "quench". In a superconducting cable system the current is (only) partially transferred to the metallic former on which the HTS tapes are wound, but the quenched superconducting material (and cable core) is further heated up and is generally destroyed if the current is not switched out by external safety systems, typically within 100ms-1s allowing a selective grid protection.

It is therefore an object of the present invention to provide a high temperature superconducting cable assembly which provides a desired level of operational performance but at reduced manufacturing cost.

It is a further object of the present invention to provide a high temperature superconducting cable assembly which is operable to extend the critical time following quench before switching out the power transmission through the cable in order to limit heat-up and potential damage.

### Summary of the invention

According to the present invention there is provided a superconducting cable assembly comprising a high temperature superconducting material extending between a first end and a second end of the cable assembly and along which superconducting material, in use, there is a positive temperature gradient between the first and second ends; a cryostat in thermal communication with the superconducting material and containing a cryogen for cooling the superconducting material; wherein the superconducting material is physically configured to provide constant current carrying capacity between the first and second ends during operation of the cable assembly.

Preferably, the superconducting material is physically configured to provide a constant critical current value along the superconducting material for a defined cryogenic temperature profile of the superconducting material between the first and second ends of the cable assembly.

Preferably, the superconducting material is physically configured to facilitate a substantially uniform quench along the superconducting material for a defined cryogenic temperature profile of the superconducting material between the first and second ends of the cable assembly.

Preferably, the quantity of the superconducting material increases between the first end and the second end

Preferably, the superconducting material comprises a plurality of superconducting tapes.

Preferably, the cable assembly comprises a plurality of co-wound superconducting tapes.

Preferably, the number of co-wound superconducting tapes is varied between the first and second ends.

Preferably, at least some of the superconducting tapes vary in geometry longitudinally in order to provide the constant current carrying capacity.

Preferably, at least some of the superconducting tapes vary in cross section in order to provide the constant current carrying capacity.

Preferably, a plurality of the superconducting tapes are arranged in layers which vary in thickness in order to provide the constant current carrying capacity.

Preferably, at least some of the superconducting tapes vary in width in order to provide the constant current carrying capacity.

Preferably, at least some of the superconducting tapes comprise regions of differing superconducting material volume such as to locally vary the current carrying capacity of the superconducting material.

Preferably, at least some of the superconducting tapes comprise one or more longitudinally extending slits to effect the variation in cross section in order to provide the constant current carrying capacity.

Preferably, the cable system comprises a plurality of cable subsections electrically connected in series, wherein the superconducting material increases in volume from one cable subsection to the next..

Preferably, the cable assembly comprises electrically conductive elements in electrical communication with the superconducting material.

Preferably, the cable assembly comprises a metallic busbar at the first and/or second end and a high temperature superconductor coupling electrically connecting the superconducting material to the busbar.

As used herein, the term "constant current carrying capacity" is intended to mean that the current carrying capacity of the superconducting material does not vary more that 20% between any two points along the length of the cable assembly, more preferably not more than 10% and most preferably not more that 5%.

As used herein, the term "constant critical current value" is intended to mean that the critical current of the superconducting material does not vary more that 20% between any two points along the length of the cable assembly, more preferably not more than 10% and most preferably not more that 5%.

As used herein, the terms "first end" and "second end" are intended to mean either the absolute ends of the cable assembly or, where the cable assembly is divided into a plurality of sections, for example between intermediate cooling stations, the respective ends of those sections of the cable assembly.

As used herein, the term "cryogenic temperature profile" is intended to mean that in use, under cryogenic operating conditions, the superconducting material varies in temperature in the longitudinal or axial direction between a first end and a second end and in the direction of travel of current through the superconducting material, and the changing temperature along the material can be profiled in order to allow the superconducting material to be appropriately physically configured.

### Brief description of the drawings

The present invention will now be described with reference to the accompanying drawing, in which:
Figure 1 illustrates a graph of temperature and quench variation over superconductor distance;
Figure 2 illustrates the relative performance of a number of sequential subsections of a superconducting cable assembly according to an embodiment of the present invention;
Figure 3 illustrates a schematic representation of a superconductor cable assembly according to a first embodiment of the present invention;
Figure 4 illustrates a schematic plan view of a second embodiment of a superconductor cable assembly according to the present invention;
Figure 5 illustrates a schematic side elevation of the superconductor cable assembly shown in Figure 4;
Figure 6 illustrates a schematic representation of a third embodiment of a superconductor cable assembly according to the present invention;
Figure 7 illustrates a schematic representation of a fourth embodiment of a superconductor cable assembly according to the present invention;
Figure 8 illustrates a schematic representation of a fifth embodiment of a superconductor cable assembly according to the present invention;
Figure 9 illustrates a schematic representation of a sixth embodiment of a superconductor cable assembly according to the present invention; and
Figure 10 illustrates a schematic representation of an exemplary connection between tapes of superconducting material and a copper busbar at an end of a superconductor cable assembly according to the invention.

### Detailed description of the invention

As detailed above it is an object of the present invention to provide a high temperature superconducting cable assembly which can provide a substantially constant current carrying capacity along the length of the cable during use and therefore in spite of an increase in temperature along the length of the cable assembly. This will facilitate homogenous quench along the length of the cable assembly under all fault conditions. The cable assembly of the invention provides these benefits and preferably while reducing the overall cost of the cable assembly. Conventionally the use of HTS material in a superconducting cable assembly is very inefficient. The overall cable performance is always limited by the performance at the warmer end of the cable assembly or cable sub-section. Therefore, at a low temperature end the point of injection of the subcooled cryogen more than 50% of the potential current carrying capacity of the cable core may be unused. This oversized HTS material drastically increases the cable costs as the HTS tapes are one of the main cost drivers for the cable assembly.

The present invention solves these problems by providing a superconducting cable assembly in which the superconducting material, preferably HTS tapes, is physically configured along the length of the cable assembly to provide varying performance, most notably by establishing a substantially constant current carrying capacity between a cold or first end of the cable assembly and a relatively warm or second end of the cable assembly. This may be achieved in a number of ways as detailed hereinafter, and for example may be implemented by way of a continuous or step-wise change in the quantity, configuration and/or quality of the superconducting tapes.

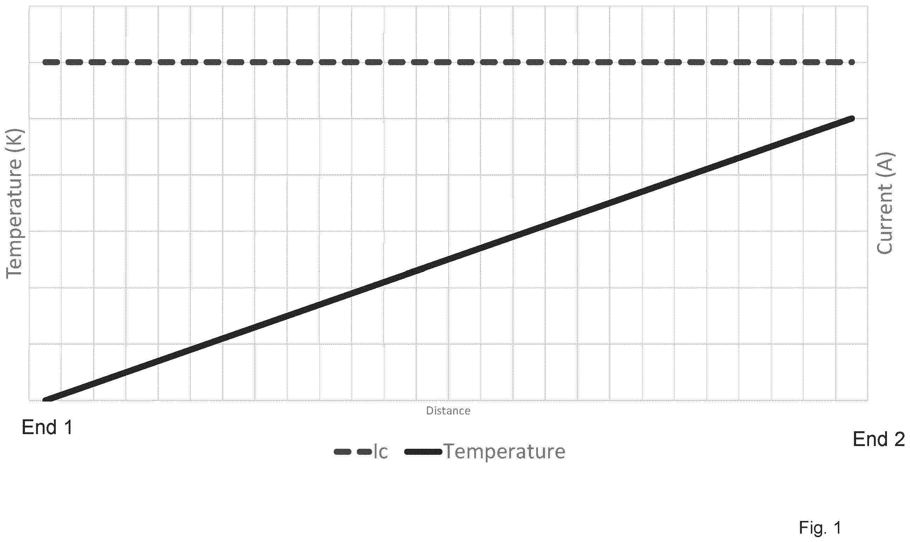

Referring now to Figure 1 of the accompanying drawings there is illustrated a plot of the cryogenic temperature profile (represented by a solid line) of a superconducting cable assembly according to the present invention, showing an increase in temperature between a first end of the cable assembly as represented by the left hand side of the plot and a second end of the cable assembly as represented by the right hand side. In an exemplary embodiment of the invention this temperature increase may be substantially linear, and may for example be in the region of a 5K increase in temperature between the first and second ends. It will however be appreciated that the cryogenic temperature profile may vary depending on a number of factors. The plot of Figure 1 additionally illustrates the maximum or critical current (Ic) of the superconducting cable assembly, represented as a broken or dashed line, and which extends substantially horizontally above the cryogenic temperature profile and which therefore illustrates that the cable assembly according to the invention is preferably configured to provide a substantially constant critical current (Ic) along the cable assembly despite the increasing temperature. This may be achieved by physically configuring the superconducting material, for example in the form of HTS tapes, which carries current along the cable assembly in a number of ways as detailed hereinafter.

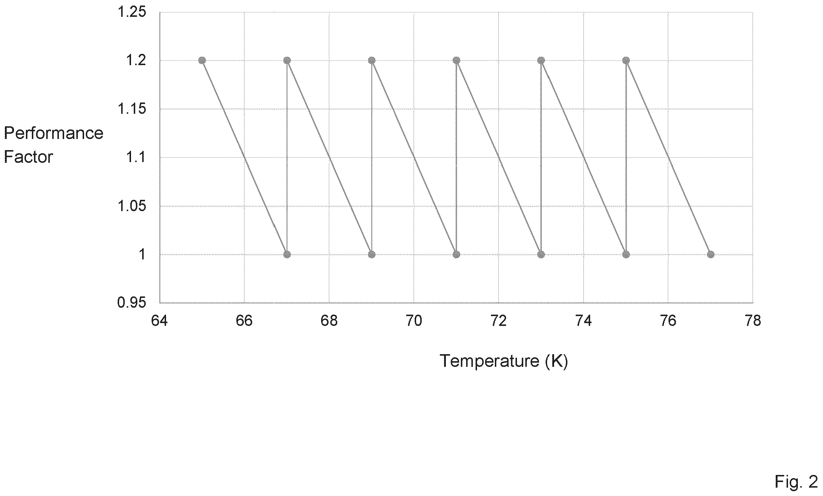

For example the cable assembly may be divided into a number of longitudinal sub-sections with variable current carrying capacity or performance. These subsections are configured to provide increasing performance and are then joined together such that that lower performance subsections are placed at a first or low-temperature end of the cable assembly followed by subsections with subsequent higher performance towards a second or high temperature end of the cable section. This particular configuration of discrete subsections of increasing performance results in a saw tooth-type performance of critical current versus temperature and length of the cable section, which is illustrated in Figure 2. It will however be understood that alternative configurations of superconducting material may be employed, for example to provide a continuous performance increase over the length of the cable assembly, and various embodiments are described in detail hereinafter. The primary goal across all embodiments is to configure the superconducting material so that in use the current carrying capacity remains constant as the temperature increases between the first and second ends of the cable assembly or cable subsection. It will be appreciated that in the above described discrete implementations the current carrying capacity will vary slightly between the ends of each subsection, but overall will remain substantially constant, by which it is meant that the current carrying capacity does not vary by more than 20% along the entire length of the cable assembly, more preferably not more than 10% and most preferably not more than 5%.

This variable performance in subsections can be achieved either by a varying number of equal HTS tapes wound in parallel or by varying the HTS tape performance/geometry with equal numbers of tapes wound in parallel. The varying performance can be achieved by using HTS tape with equal width but varying HTS layer thickness or general HTS layer performance (use of scrap goods for lower performance). Alternatively, the width of the used tapes can be varied (equal performance per width) while keeping the number of tapes per sub-section constant. The number of such subsections between cooling stations (not shown) can be optimized for the local requirements in the electric grid.

Cable subsections with variable performance can easily be produced on conventional cable winding devices. Either the number on HTS tapes helically wound on the former can be reduced or the performance of the HTS tapes can be varied including the use of B-quality tapes. The performance of the individual subsections is homogeneous over the length of the subsection. The variable performance results in a saw-tooth performance with increasing operation temperature (and length of the cable section between the cooling stations) as shown in Figure 2. This configuration allows a significant reduction in the amount of HTS tapes or the use of cheaper low performance tapes. In addition, the increased homogeneity over the length of the full section enables a better handling of small overcurrent. In contrast to a HTS cable system without modified subsections a complete quench can be achieved already with an overcurrent of only 20%. Even for lower overcurrent the cable assembly is more resilient as multiple local quenches lead to a better heat distribution.

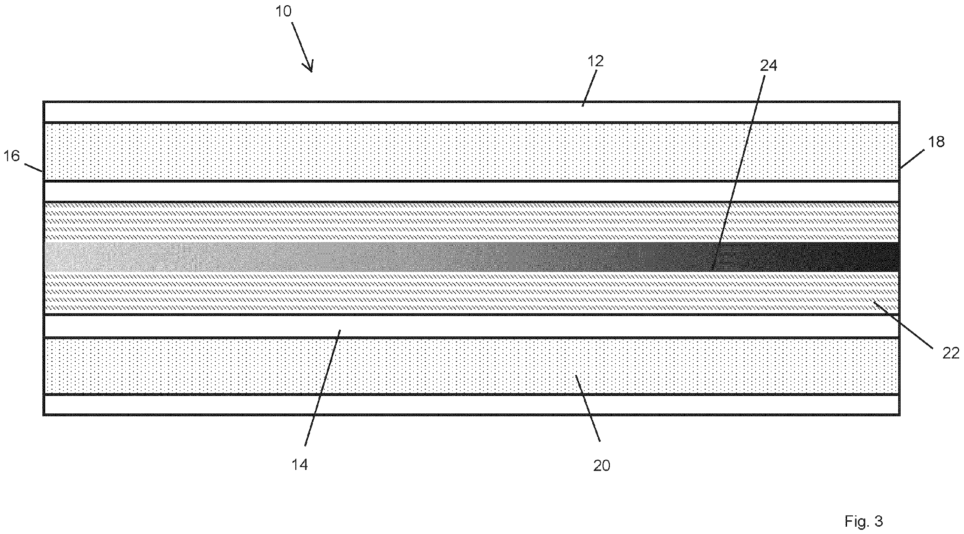

Referring now to Figure 3 there is illustrates a superconducting cable assembly according to an embodiment of the present invention, generally indicated as 10, which provides an alternative to the sub-section approach described above. The cable assembly 10 comprises a cylindrical outer cryostat 12 and a concentrically arranged cylindrical inner cryostat 14, both of which extend between a first end 16 and a second end 18 of the cable assembly 10. As noted above these may be the absolute ends of the cable assembly 10 but are more likely the ends of a subsection of the cable assembly 10, the complete cable assembly comprising multiple connected subsections. The inner cryostat 14 and the outer cryostat 12 may be formed of any suitable material and may be dimensioned for the particular application. One or more layers of insulation 20 may be provided between the inner cryostat 14 and the outer cryostat 12. It should also be understood that Figure 3 is a schematic representation of the superconducting cable assembly 10 and there are many additional or alternative layers (not shown) and other components that may form part of the cable assembly 10. The inner cryostat 14 carries a supply of a liquid cryogen 22 therethrough, for example liquid nitrogen, and the cable assembly 10 further comprises superconducting material 24 in the form of one or more HTS tapes 24 extending longitudinally through the inner cryostat 14 and therefore in thermal communication with the cryogen 22. It will be appreciated that the superconducting material 24 could be located externally of the inner cryostat 14 but nevertheless in thermal communication with the cryogen 22. In use current flows through the superconducting material 24 from the first end 16 to the second end 18. As a result the first end 16 is said to be the "cold" end while the second end is the "hot" end, simply meaning that the temperature of the superconducting material 24 increases between the first end 16 and the second end 18, thus defining the cryogenic temperature profile of the superconducting material 24.

In the embodiment of Figure 3 the superconducting material 24 increases uniformly in thickness between the first end 16 and the second end 18 such as to maintain a substantially constant current carrying capacity in spite of the increasing temperature of the superconducting material 24 between the first end 16 and the second end 18. The increase in thickness of the superconducting material 24 is selected to match the increasing temperature. Thus the distribution profile of the superconducting material 24 can be said to be matched or aligned with the cryogenic temperature profile of the superconducting material 24. The increasing thickness of the superconducting material 24 is represented in Figure 3 by the darkening shade of the superconducting material 24 as it extends from the first or cold end 16 towards the second or hot end 18.

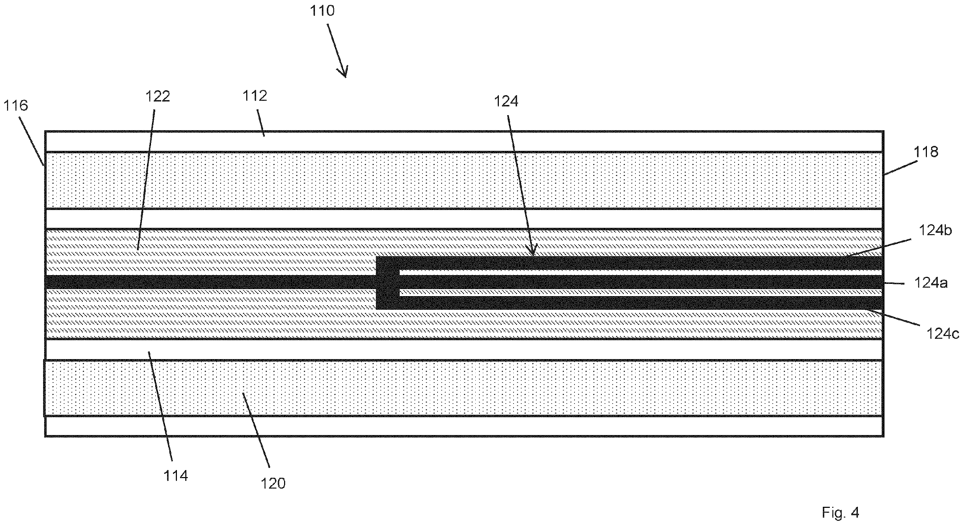

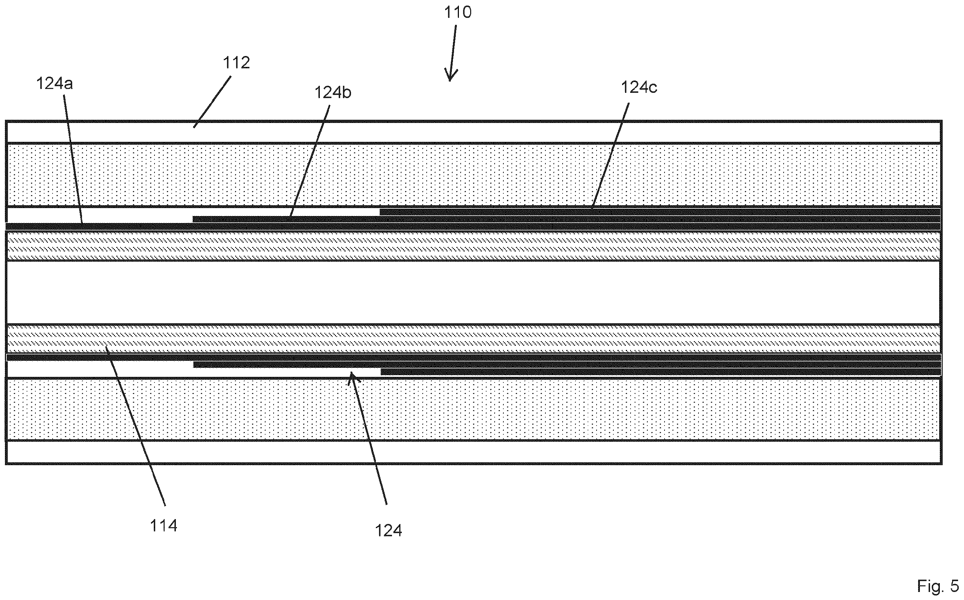

Referring now to Figures 4 and 5 there is illustrated a second embodiment of a superconducting cable assembly according to the present invention, generally indicated as 110. In this alternative embodiment like components have been accorded like reference numerals and unless otherwise stated perform a like function. The cable assembly 110 comprises an outer cryostat 112 and an inner cryostat 114 which extend between first and second ends 116, 118 of the cable assembly 110. Insulation 120 is provided between the outer cryostat 112 and the inner cryostat 114, with a liquid cryogen 122 flowing through the central bore of the inner cryostat 114. The cable assembly 110 further comprises superconducting material 124 in the form of a plurality of co-wound HTS tapes 124a, 124b, 124c which are wound around an exterior of the inner cryostat 114. The first tape 124a extends the full length of the cable assembly 110 from the first end 116 to the second end 118, while the second tape 124b extends from a position upstream of the first end 116 to the second end 118, and the third tape 124c extends from a position further upstream and continues to the second end 118. In this manner the co-wound tapes 124a, 124b, 124c provides a stepwise increase in the quantity of superconducting material 124 along the length of the cable assembly 110 in order to provide the constant current carrying capacity across the increasing cryogenic temperature profile from the first end 116 to the second end 118.

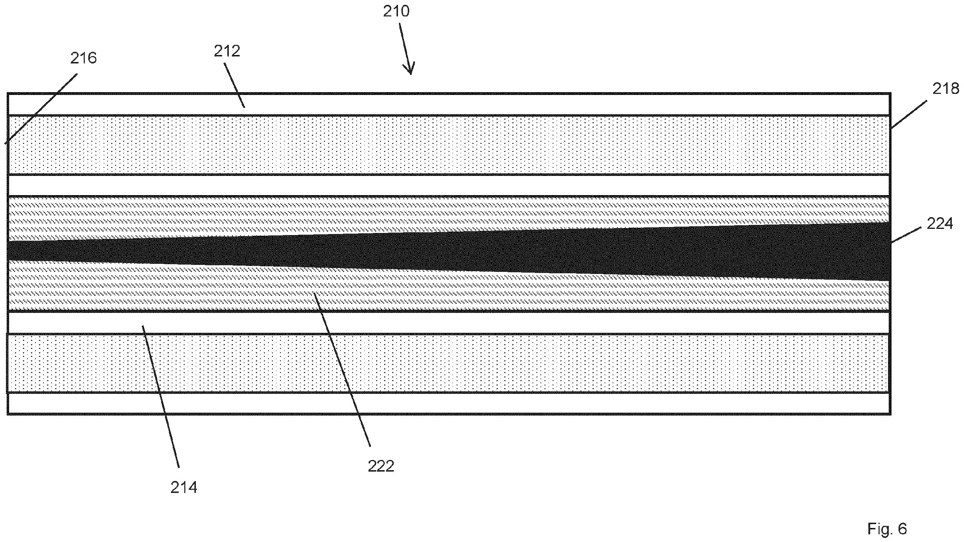

Referring to Figure 6 there is illustrated a third embodiment of a superconducting cable assembly according to the present invention, generally indicated as 210. In this alternative embodiment like components have been accorded like reference numerals and unless otherwise stated perform a like function. The cable assembly 210 comprises an outer cryostat 212 and an inner cryostat 214 which extend between first and second ends 216, 218 of the cable assembly 210. Insulation 220 is provided between the outer cryostat 212 and the inner cryostat 214, with a liquid cryogen 222 flowing through the central bore of the inner cryostat 214. The cable assembly 210 further comprises superconducting material 224 which increases uniformly in width in order to provide the constant current carrying capacity between the cold first end 216 and the hot second end 218.

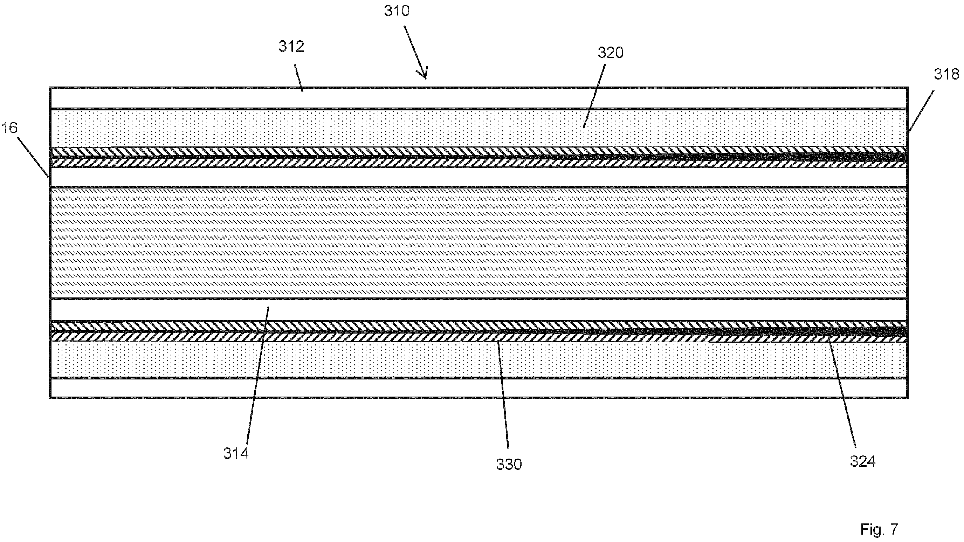

Referring to Figure 7 there is illustrated a fourth embodiment of a superconducting cable assembly according to the present invention, generally indicated as 310. In this alternative embodiment like components have been accorded like reference numerals and unless otherwise stated perform a like function. The cable assembly 310 comprises an outer cryostat 312 and an inner cryostat 314 which extend between first and second ends 316, 318 of the cable assembly 310. Insulation 320 is provided between the outer cryostat 312 and the inner cryostat 314, with a liquid cryogen flowing through the central bore of the inner cryostat 314. The cable assembly 310 further comprises superconducting material 324 in the form of HTS tape 324 wound around the exterior of the inner cryostat 314 and which has been modified to increase the volume or quantity of the tape 324 between the first end 316 and the second end 318. This is achieved through the formation or provision of an array of slits 330 in the tape 324 which reduce in dimension from the first end 316 to the second end 318 to provide the increase in volume or quantity of the superconducting material 324. The slits 330 may for example be formed by laser cutting the HTS tape 324 with the appropriate pattern. The width of the slits 330 may for example vary from 3mm at the first end 316 to 4mm at the second end 318. The slits 330 do not cause additional waste and increase the yield of the HTS tape 324.

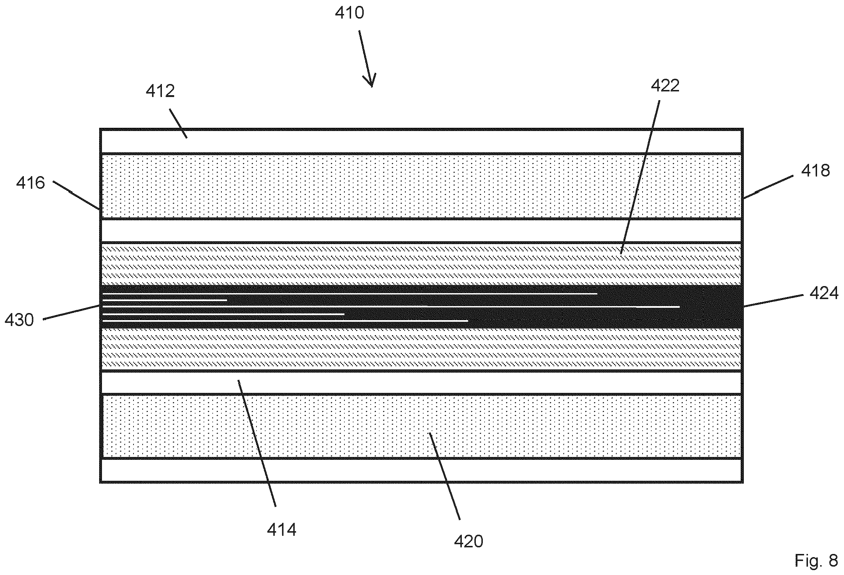

Figure 8 illustrated a fifth embodiment of a superconducting cable assembly according to the present invention, generally indicated as 410, which is similar in configuration and operation to the cable assembly 410 of the fourth embodiment, and in this embodiment like components have been accorded like reference numerals and unless otherwise stated perform a like function. The cable assembly 410 comprises an outer cryostat 412 and an inner cryostat 414 which extend between first and second ends 416, 418 of the cable assembly 410. Insulation 420 is provided between the outer cryostat 412 and the inner cryostat 414, with a liquid cryogen 422 flowing through the central bore of the inner cryostat 414. The cable assembly 410 further comprises superconducting material 424 in the form of HTS tape 424 extending longitudinally through bore of the inner cryostat 414 and which has again been modified to vary the volume or quantity of the tape 424 between the first end 416 and the second end 418, more particular to effectively increase the volume or quantity as the tape 424 extends from the first end 416 towards the second end 418. This is achieved through the formation or provision of an array of slits 430 in the tape 424 which extend longitudinally of the tape 424, with a plurality of the slits 430 extending further from the cold first end 416 that some of the other slits 430. In this way the volume or quantity of superconducting material increases from the first end 416 towards the second end 418, and this increase can be precisely tailor through the number and length of the slits 430 to provide a constant current carrying capacity across the cryogenic temperature profile of the superconducting material 424.

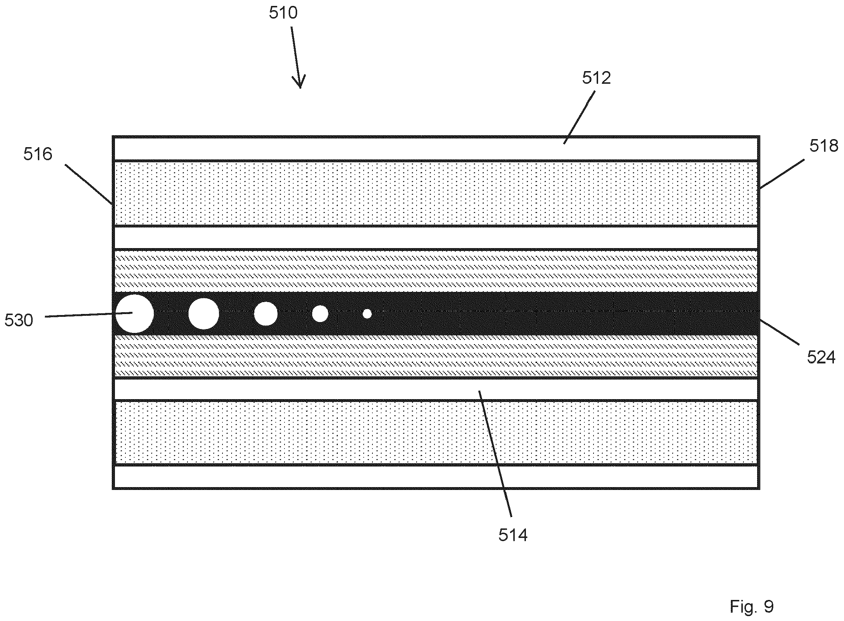

Referring now to Figure 9 there is illustrated a fifth embodiment of a superconducting cable assembly according to the present invention, generally indicated as 510. Like components have been accorded like reference numerals and unless otherwise stated perform a like function. The cable assembly 510 comprises an outer cryostat 512 and an inner cryostat 514 which extend between first and second ends 516, 518 of the cable assembly 510. The cable assembly 510 additionally comprises superconducting material 524 which increases in volume/quantity from the first end 516 to the second end 518 in order to provide the constant current carrying capacity between the cold first end 516 and the hot second end 518. In particular the superconducting material or tapes 524 have been manufactured or modified to alter or vary the material volume or quantity at different points along the length of the cable assembly 510 in order to locally vary the current carrying capacity of the superconducting material 524. This is achieved by the removal of material in different amounts at different points, in this case the removal of circular portions of the superconducting tape 524. Alternatively some form of local defect could imposed on the superconducting material 524 to achieve the same result by negative impacting the conductivity at that location.

The HTS layer thickness (or other means of controlling relative critical current as outlined above) can be varied such that it provides a more uniform quench along the length of the cable. This is achieved through a matching of the critical current along the length of the cable assembly (through HTS layer material variation) with controlled sequential sections of cryogenic temperature profiled along the cable assembly length. In particular, the approaches outlined above address the issue of concentrated or damaging local quenches. HTS layer thickness can be varied such that it provides a more uniform quench along the length of the cable assembly. This is achieved through an explicit matching of the critical current along the length of the cable assembly (through HTS layer material variation) with controlled sequential sections of cryogenic temperature profiled along the length.

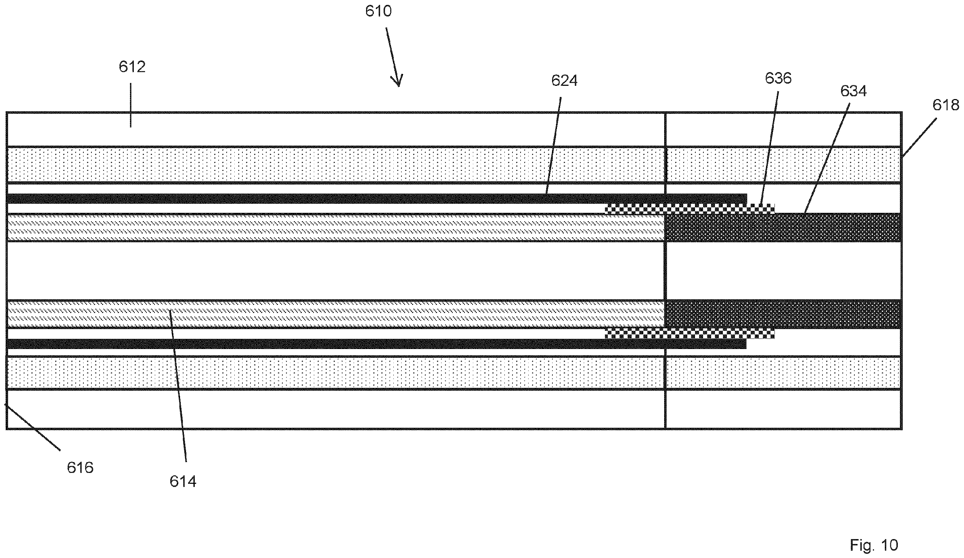

In practice, the end of the cable assembly is often most susceptible to a local quench as connection to the termination/bushing/current lead (not shown) can form an additional source of heat through conduction and/or joule heating at the joint. Thus referring to Figure 10, a further alternative embodiment of a superconducting cable assembly according to the present invention is illustrated, generally indicated as 610. Like components have been accorded like reference numerals and unless otherwise stated perform a like function. The cable assembly 610 comprises an outer cryostat 612 and an inner cryostat 614 which extend between first and second ends 616, 618 of the cable assembly 610. Superconducting material 624 extends between the ends 616, 618 and increases in volume/quantity as hereinbefore described. An electrically conductive busbar 5634 is provided at the second end 618 to allow connection of the cable assembly 610, the busbar 634 preferably formed from copper. In order to mitigate the above mentioned heating issues, a superconducting coupling 636 is provided between the superconducting material 624 and the busbar 634, which coupling 636 comprises sufficient HTS material to increase the critical current such as to avoid local quench of the superconducting material 624 at the interface with the busbar 634. This arrangement may be employed with any of the embodiment described herein.

The superconducting cable assembly of the present invention thus facilitates a varyng performance over the length of the cable assembly, for example between two cooling stations, and allows safe operation under fault conditions and at reduced cost as a result of using a lower amount of the HTS tape/material.

The invention is not limited to the embodiments described herein but can be amended or modified without departing from the scope of the present invention.

## Claims

1. A superconducting cable system comprising a high temperature superconducting material extending between a first end and a second end of the cable assembly and along which superconducting material, in use, there is a positive temperature gradient between the first and second ends; a cryostat in thermal communication with the superconducting material and containing a cryogen for cooling the superconducting material; wherein the superconducting material is physically configured to provide constant current carrying capacity between the first and second ends during operation of the cable assembly.

2. A superconducting cable system according to claim 1 in which the superconducting material is physically configured to provide a constant critical current value along the superconducting material for a defined cryogenic temperature profile of the superconducting material between the first and second ends of the cable assembly.

3. A superconducting cable system according to claim 1 or 2 in which the superconducting material is physically configured to facilitate a substantially uniform quench along the superconducting material for a defined cryogenic temperature profile of the superconducting material between the first and second ends of the cable assembly.

4. A superconducting cable system according to any preceding claim in which the superconducting material comprises a plurality of superconducting tapes.

5. A superconducting cable system according to claim 4 comprising a plurality of co-wound superconducting tapes.

6. A superconducting cable system according to claim 5 in which the number of co-wound superconducting tapes is varied between the first and second ends.

7. A superconducting cable system according to any of claims 4 to 6 in which at least some of the superconducting tapes vary in geometry longitudinally in order to provide the constant current carrying capacity.

8. A superconducting cable system according to any of claims 4 to 7 in which at least some of the superconducting tapes vary in cross section in order to provide the constant current carrying capacity.

9. A superconducting cable system according to claim 8 in which a plurality of the superconducting tapes are arranged in layers which vary in thickness in order to provide the constant current carrying capacity.

10. A superconducting cable system according to claim 8 or 9 in which at least some of the superconducting tapes vary in width in order to provide the constant current carrying capacity.

11. A superconducting cable system according to any of claims 8 to 10 in which at least some of the superconducting tapes comprise regions of differing superconducting material volume in order to locally vary the current carrying capacity of the superconducting material.

12. A superconducting cable system according to any of claims 8 to 11 in which at least some of the superconducting tapes comprise one or more longitudinally extending slits to effect the variation in cross section in order to provide the constant current carrying capacity.

13. A superconducting cable system according to any preceding claim in which the superconducting material is arranged in a plurality of longitudinally sequential subsections having an increase in current carrying capacity between adjacent subsections.

14. A superconducting cable system according to any preceding claim comprising electrically conductive elements in electrical communication with the superconducting material.

15. A superconducting cable system according to any preceding claim comprising a metallic busbar at the first and/or second end and a high temperature superconductor coupling electrically connecting the superconducting material to the busbar.

16. A superconducting cable system according to any preceding claim comprising a plurality of cable subsections electrically connected in series, wherein the superconducting material increases in volume from one cable subsection to the next.
